## Europäisches Patentamt

## European Patent Office

## Office européen des brevets

(19)

(11) Numéro de publication : **0 131 082**
**B1**

(12)

# FASCICULE DE BREVET EUROPÉEN

(45) Date de publication du fascicule du brevet :
**04.03.87**

(51) Int. Cl.⁴ : **B 65 G 57/00**, B 65 G 7/08,
B 65 G 65/00

(21) Numéro de dépôt : **83810308.3**

(22) Date de dépôt : **06.07.83**

(54) Dispositif de placement de palettes sur une aire de chargement.

(73) Titulaire : **FABRIQUES DE TABAC REUNIES S.A.**
**Quai Jeanrenaud 3 P.O. Box 11**
**CH-2003 Neuchâtel-Serrières (CH)**

(72) Inventeur : **Berger, Maurice**
**Chemin des Polonais 43**
**CH-2016 Cortaillod (CH)**
Inventeur : **Bernasconi, Jean-François**
**Landions 6**
**CH-2016 Cortaillod/NE (CH)**

(74) Mandataire : **Rochat, Daniel Jean et al**
**Bovard AG Patentanwälte VSP Optingenstrasse 16**
**CH-3000 Bern 25 (CH)**

(43) Date de publication de la demande :
**16.01.85 Bulletin 85/03**

(45) Mention de la délivrance du brevet :
**04.03.87 Bulletin 87/10**

(84) Etats contractants désignés :
**AT BE CH DE FR GB IT LI LU NL SE**

(56) Documents cités :
**DE-B- 1 038 472**
**FR-A- 2 207 076**
**US-A- 4 119 214**

Jouve, 18, rue St-Denis, 75001 Paris, France

## Description

La présente invention a pour objet un dispositif de placement de palettes sur une aire de chargement, comportant un transporteur mobile, muni de moyens moteurs capables de lui imposer un déplacement horizontal de mise en place entre une position de retrait et une position de chargement, en entraînant avec lui dans ce déplacement une palette vide et comportant en outre un réceptacle ajouré, le transporteur étant agencé de manière à dégager une palette du réceptable au cours dudit déplacement de mise en place.

Un dispositif de ce genre est déjà connu, notamment par le fascicule de demande de brevet FR-2 207 076. Le transporteur est capable de déplacer une à une des palettes empilées dans un réceptacle qui constitue un magasin et de les avancer sur une table de chargement située audessus du sol, au niveau de la base de l'empilement des palettes dans le magasin.

D'autre part, on connaît des appareils de manutention qui sont capables d'amener et d'arranger automatiquement sur des palettes certains objets de forme simple, présentant tous la même dimension. Ainsi, la demande EP-A-90 123 publiée après le dépôt de la présente demande et constituant un état de la technique au sens de l'article 54 (3) CBE, décrit un appareil de manutention qui est associé à un dispositif capable d'engager des cartouches de cigarettes dans des cartons et de fermer ces derniers. Cet appareil de manutention saisit les cartons et les déplace de façon à former des empilements sur une palette.

La présente invention résulte de la recherche de moyens automatiques peu encombrants, simples, susceptibles d'être associés à l'appareil de manutention de la demande européenne précitée, et permettant la mise en place des palettes dans une position de changement déterminée de façon précise, et leur évacuation après leur chargement de manière systématique et rapide. Bien entendu, le dispositif selon la présente invention peut être associé à diverses installations automatiques de distribution et de transport d'objets. Il peut également être associé à des opérations de chargement faites de façon entièrement manuelle.

Selon la présente invention, le dispositif de placement de palettes du genre mentionné au début est caractérisé en ce que le réceptable est capable de basculer autour d'un axe horizontal entre une position de réception et une position de rabattement, et de supporter dans la position de réception la palette placée sur sa tranche, et en ce que le transporteur est agencé de manière à s'engager dans la palette disposée dans le réceptacle ajouré quand ce dernier est en position de rabattement.

On va décrire ci-après à titre d'exemple une forme d'exécution du dispositif suivant l'invention en se référant au dessin annexé, dont :

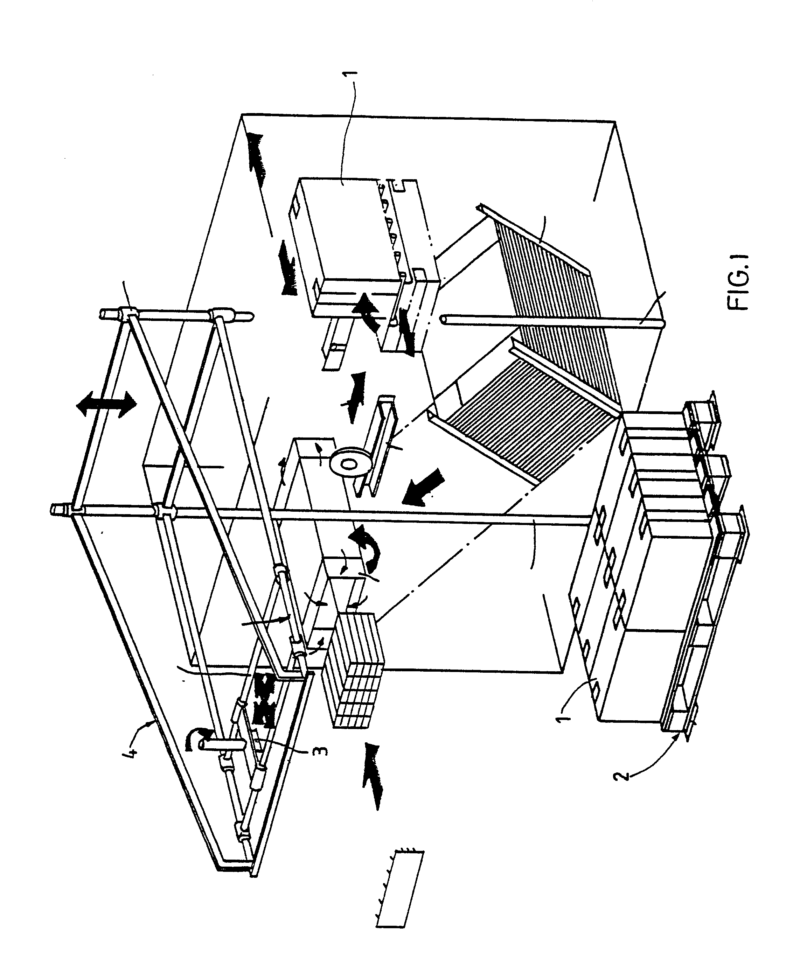

la figure 1 est une vue en perspective schématique et simplifiée d'un appareil de manutention de cartons de cigarettes connu en soi et auquel le dispositif selon l'invention peut être associé,

la figure 2 est une vue en perspective schématique et simplifiée du dispositif de placement de palettes associé à l'appareil de manutention de la fig. 1,

les figures 3, 4 et 5 sont des vues en élévation schématiques montrant les phases du fonctionnement du dispositif de placement de palettes,

la figure 6 est une vue en coupe verticale du dispositif montrant un bras transporteur dans la position de chargement,

la figure 7 est une vue en coupe horizontale partielle du bras transporteur visible à la fig. 6, et

la figure 8 est une vue en élévation partielle du bras transporteur de la fig. 6 montrant ce bras dans sa position au cours d'un déplacement ultérieur.

Avant de passer à la description détaillée du dispositif de placement des palettes, on rappellera rapidement qu'on connaît déjà un appareil de manutention d'emballage de cigarettes qui est capable d'arranger des cartons 1 en couches successives sur une palette 2 placée devant l'appareil. Les cartons 1 une fois remplis et fermés sont saisis par un organe de préhension 3 représenté par une ventouse qui est portée par un châssis 4 capable de se déplacer en hauteur, et qui est agencée sur des barres de guidage de façon à pouvoir se déplacer longitudinalement et transversalement afin d'amener les cartons 1 chacun à l'emplacement qui lui est destiné sur la palette 2.

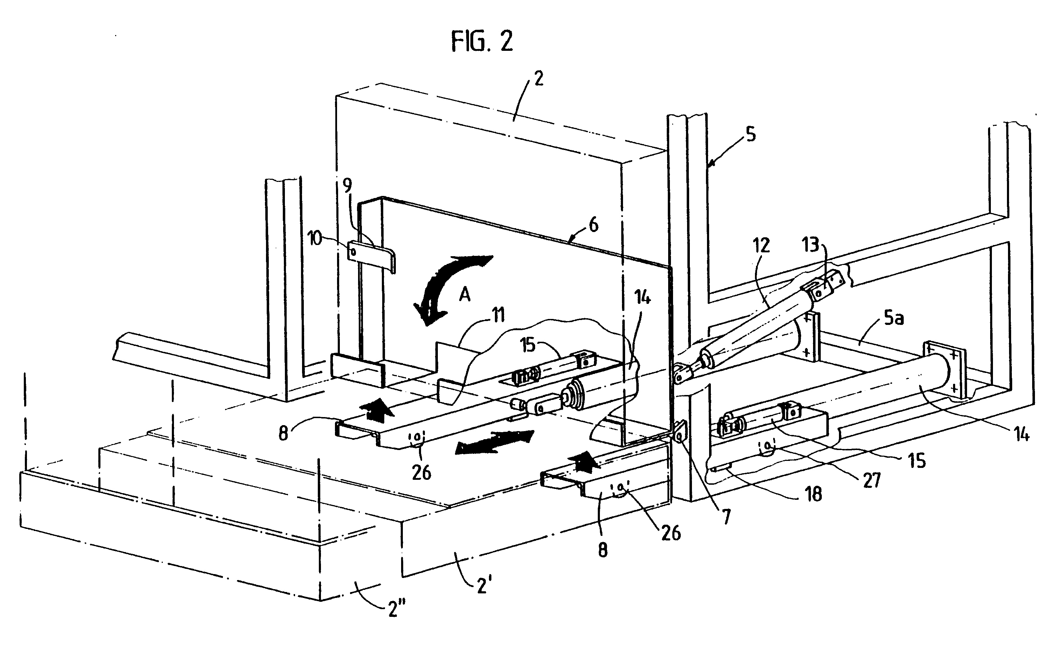

Le dispositif qui va être décrit ci-après est destiné à permettre la mise en place précise, simple et rapide des palettes 2 à un emplacement de chargement bien déterminé sur l'aire de chargement qui s'étend devant l'appareil de manutention, afin que les organes de commande automatique des déplacements de la ventouse 3 puissent fonctionner en se référant à une position de chargement prédéterminée et fixe pour la palette 2. On voit à la fig. 2 la partie inférieure d'un châssis 5 qui constitue un support et un socle aussi bien pour l'appareil de manutention que pour le dispositif de placement des palettes. A ce châssis 5 sont accrochés d'une part un réceptacle 6 qui est articulé au châssis en deux points 7 aligné selon un axe horizontal et d'autre part deux bras transporteurs 8 disposés parallèlement sur le sol et capables de se déplacer horizontalement dans une direction perpendiculaire à l'axe de basculement du réceptacle 6 défini par les articulations 7. Le réceptacle 6 est une pièce de tôle pliée et coudée en forme de L de façon à définir une coulisse dont le flanc arrière lorsque le réceptacle est en position relevée comme on le voit à la fig. 2, s'étend plus haut que le flanc avant et dont le fond rabattu porte un taquet basculant 9 qui est articulé en 10 sur le bord antérieur du fond. Cette pièce de tôle présente en outre deux échancrures symétriques 11 permettant comme on le verra plus loin l'engagement des bras transporteurs 8. Un vérin 12 dont le cylindre est fixé par une articulation 13 au châssis 5 et dont la tige est articulée sur le flanc arrière de la coulisse 6 permet de manœuvrer cette dernière en la faisant basculer autour de l'axe défini par les articulations 7. La flèche A montre ce mouvement de basculement de la coulisse 6.

Quant aux bras transporteurs 8, on voit à la fig. 2 qu'ils sont manœuvrés chacun par un vérin 14 dont le cylindre est rigidement fixé à une barre arrière 5a du châssis 5, et dont l'axe s'étend parallèlement à la direction du déplacement des bras 8. De plus, chaque bras 8 porte un vérin auxiliaire 15 dont la fonction sera expliquée plus loin.

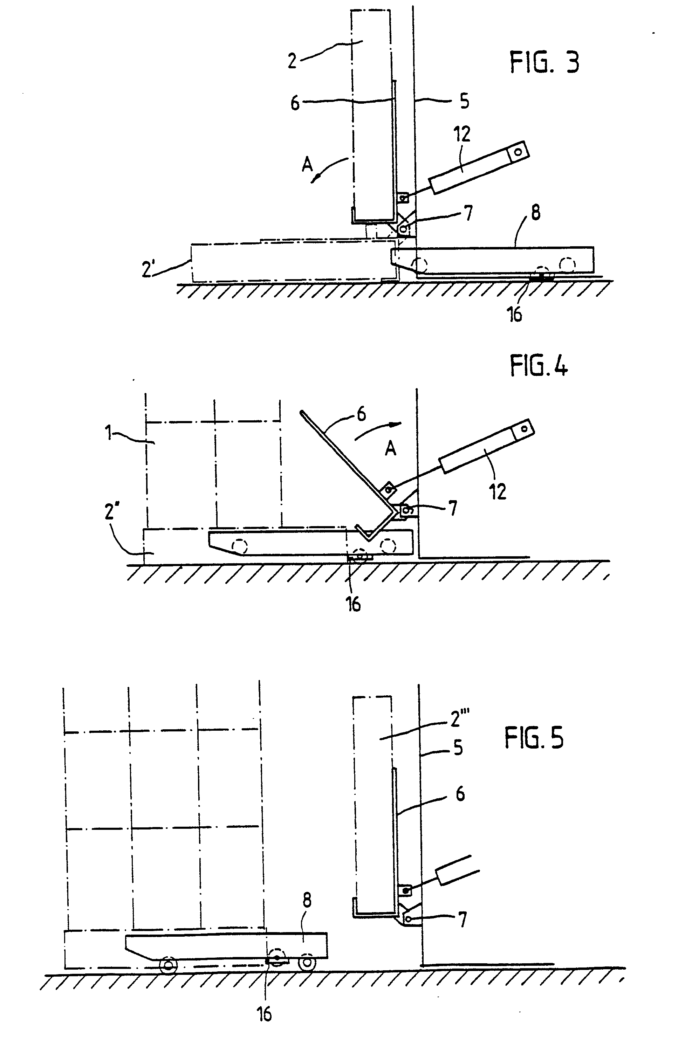

A la fig. 2 on voit également que la coulisse 6 est représentée d'une part en traits pleins dans sa position relevée, et d'autre part en traits mixtes dans sa position rabattue, une palette 2 étant représentée en traits mixtes dans la position de réception et en position 2' dans la position de rabattement, tandis que la position 2″ montre la même palette en position de chargement. Ces trois positions sont également visibles aux fig. 3, 4 et 5 où l'on voit à nouveau représentés schématiquement le châssis 5, le vérin de basculement 12, la coulisse 6 et un des bras transporteurs 8. A la fig. 3 la coulisse 6 est dans sa position de réception et une palette 2 peut être engagée sur sa tranche dans cette coulisse de façon à être accrochée par le taquet 9 qui la retient en place en position verticale. Au cours du basculement de la coulisse 6 illustré par la flèche A, la palette vient se placer sur le sol dans la position 2' de sorte que le bras transporteur 8 peut être déplacé vers l'avant à partir de sa position de retrait, son extrémité antérieure s'engageant dans l'une des échancrures 11. Ce bras passe librement entre les plots de la palette jusqu'à ce qu'une butée dont il est pourvu sur sa surface inférieure, butée qui est désignée par 16, accroche une plaque marginale inférieure de la palette. Le mouvement d'avance des bras 8 se poursuit jusqu'à ce que le déplacement de mise en place soit terminé et pendant la dernière partie de ce déplacement, la butée 16 entraîne la palette 2 de façon à la dégager de la coulisse 6 qui peut ensuite être relevée par rétraction du vérin 12 comme on le voit à la fig. 4. L'amplitude du déplacement de mise en place du bras 8 est réglée par des moyens qui seront décrits plus loin, de sorte que la palette atteint avec précision un emplacement de chargement désigné par 2″, emplacement dans lequel des cartons 1 peuvent être empilés, par exemple par un appareil de manutention automatique qui sera programmé en fonction de l'emplacement de chargement 2″.

Pendant que le chargement s'effectue comme on le voit à la fig. 5, et lorsque la première couche est palettisée, on peut mettre en place une nouvelle palette 2‴ sur la coulisse 6 qui a été relevée et ramenée dans sa position de réception.

Finalement, le bras transporteur 8 est capable d'effectuer un déplacement ultérieur à partir de la position de chargement vers une position d'attente en amenant avec lui la palette entièrement chargée et en libérant cette palette dans la position d'attente, afin de pouvoir être ramené en position de retrait au moment où une nouvelle opération de mise en place d'une palette vide doit être effectuée.

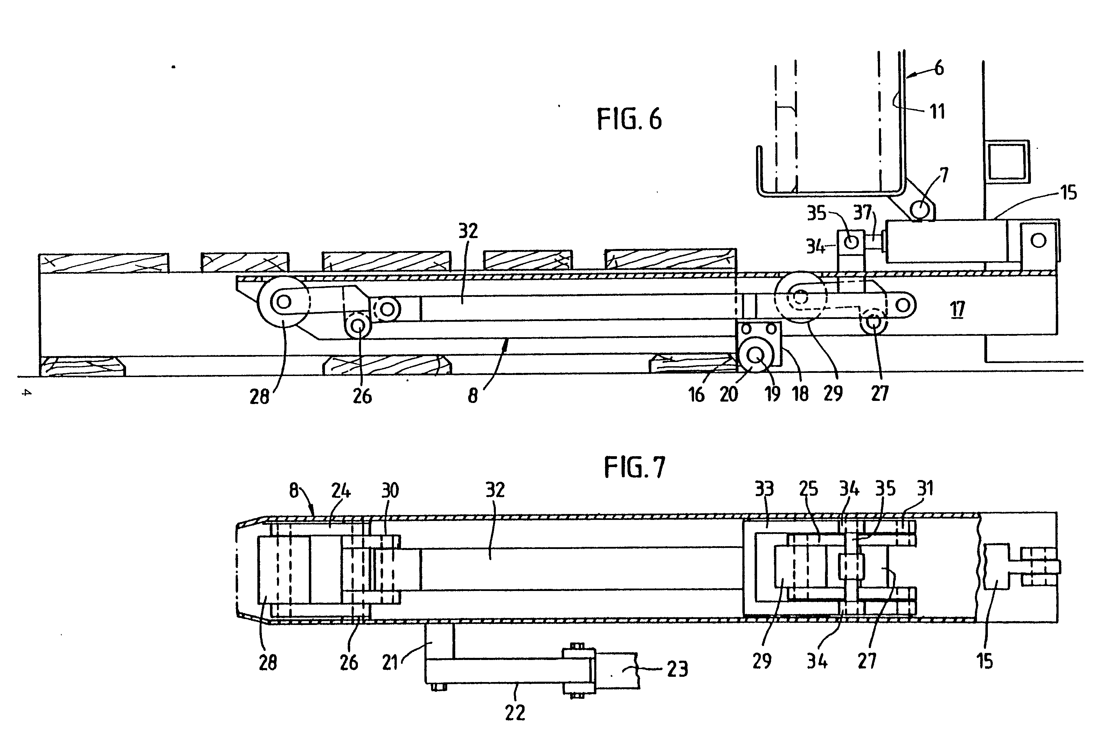

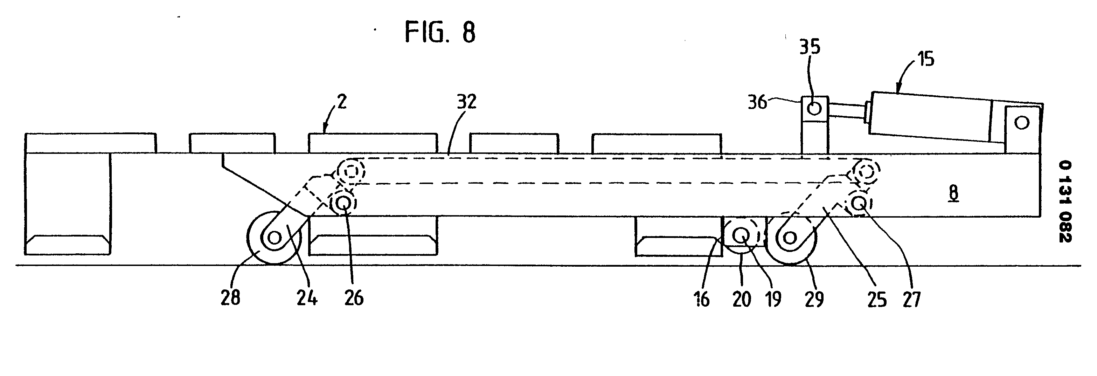

La conformation des bras transporteurs 8 est représentée plus en détail aux fig. 6, 7 et 8. Les fig. 6 et 7 montrent un bras transporteur dans la position de chargement, tandis que la fig. 8 montre ce bras transporteur au cours de son déplacement ultérieur. Chaque bras transporteur comporte un corps allongé à profil en U 17. Sur la face intérieure des flancs de ce corps 17 sont fixées deux plaquettes 18 qui se trouvent en vis-à-vis et dont les bords antérieurs constituent les butées 16 déterminant la position de chargement. Ces plaquettes servent en outre à supporter entre elles un axe de pivotement 19 sur lequel est monté un galet 20. Le bras transporteur est supporté d'autre part par un tourillon latéral 21 fixé à la face extérieure d'un des flancs du corps 17 et auquel est reliée une barre rigide 22 articulée à l'extrémité de la tige 23 du vérin 14. Comme l'extrémité arrière du cylindre de ce vérin 14 est rigidement fixée comme on l'a dit précédemment à la barre 5a du châssis 5, le bras 8 est entièrement guidé dans une direction perpendiculaire à l'axe de basculement de la coulisse 6 par le galet 20 et par la liaison entre la tige 23 et le corps 17. A l'intérieur du profil en U du corps 17 est monté un train de galets extractibles. Deux fourches 24 et 25 sont articulées sur des axes 26 et 27 dont les extrémités sont liées aux flancs du corps 17. Ces deux axes d'articulation 26 et 27 se trouvent respectivement à l'extrémité avant et au voisinage de l'extrémité arrière du corps 17. Chacune des fourches 24 et 25 s'étend vers l'avant et supporte à son extrémité avant l'un des deux galets de transport 28 et 29 de diamètre légèrement supérieur à celui du galet 20. Enfin, à leurs extrémités arrières, les fourches 24 et 25 sont liées par des articulations 30 et 31 à une barre de commande 32. Comme on le voit à la fig. 7, la barre de commande 32 s'étend à son extrémité avant entre les deux flancs de la fourche 24, tandis qu'à son extrémité arrière elle présente elle-même une fourche 33 qui embrasse la fourche 25. Cette fourche 33 présente d'autre part deux montants verticaux 34 qui sont reliés par un axe d'articulation 35 auquel est fixée la tête 36 de la tige 37 du vérin 15. Le cylindre de ce vérin étant articulé d'autre part par son extrémité arrière sur le côté supérieur du corps 17, on voit que la manœuvre du vérin fait avancer la barre de commande 32 vers l'avant, ce qui fait basculer les deux fourches 24 et 25 autour de leurs articulations 30 et 31. Les galets 28 et 29 sont déplacés vers le bas au cours de ce pivotement et viennent s'appuyer sur le sol en soulevant le bras 8 comme le montre la fig. 8. Le galet 20 quitte alors le sol et la palette 2 dans laquelle les bras transporteurs 8 sont engagés est aussi soulevée, ce qui permet de transporter la palette chargée sur une distance au moins égale à une largeur de palette et par conséquent de dégager entièrement l'aire de chargement. La rétraction du vérin 15 ramène le bras transporteur dans la position de la fig. 7, de sorte que le vérin 14 peut le ramener dans sa position de retrait en laissant la palette chargée dans la position d'attente.

On se rend compte que le fonctionnement du dispositif décrit peut être automatisé si la commande des bras transporteurs est liée à la détection de leur position. Ainsi, on peut fixer au bras transporteur un organe de commande capable de coopérer avec des contacteurs eux-mêmes placés à des emplacements fixes correspondant aux positions prévues, c.-à-d. la position de retrait, la position de chargement et la position d'attente. Comme la butée 16 entraîne nécessairement la palette 2 au moment où elle entre en contact avec elle, la position de cette palette est liée à celle du bras transporteur, de sorte que la commande des opérations du bras transporteur a pour effet de positionner la palette aux emplacements voulus.

L'engagement d'une palette placée sur sa tranche dans la coulisse 6 est une opération très simple et il suffit qu'elle soit menée jusqu'à ce que le bord avant de la palette butte contre le fond rabattu de la coulisse pour que le positionnement soit assuré, le taquet basculant 9 retenant la palette en position verticale. Après le rabattement il bascule autour de son articulation 10 vers l'avant sous l'effet de la poussée de la palette pendant le dégagement de celle-ci et lorsque la coulisse reprend sa position verticale il retombe, sous l'effet de son poids dans la position de la fig. 2 et il est retenu par une butée d'appui (non représentée). Le stockage des palettes vides en position verticale économise de la place et facilite la manutention. Enfin, grâce à ce mode de mise en place, la précision des opérations ultérieures est assurée.

**Revendications**

1. Dispositif de placement de palettes sur une aire de chargement, comportant un transporteur (8) mobile, muni de moyens moteurs (14) capables de lui imposer un déplacement horizontal de mise en place entre une position de retrait et une position de chargement, en entraînant avec lui dans ce déplacement une palette vide, et comportant en outre un réceptacle ajouré (6), le transporteur (8) étant agencé de manière à dégager une palette (2) du réceptacle au cours dudit déplacement de mise en place, caractérisé en ce que le réceptacle (6) est capable de basculer autour d'un axe horizontal (7) entre une position de réception et une position de rabattement, et de supporter dans la position de réception la palette (2) placée sur sa tranche, et en ce que le transporteur (8) est agencé de manière à s'engager dans la palette (2) disposée dans le réceptacle ajouré (6) quand ce dernier est en position de rabattement.

2. Dispositif suivant la revendication 1, caractérisé en ce que les moyens moteurs sont agencés de façon à déplacer le transporteur (8) en translation horizontale dans une direction perpendiculaire à l'axe (7) de basculement du réceptacle.

3. Dispositif suivant la revendication 2, caractérisé en ce que les moyens moteurs (14) sont agencés de manière à effectuer en outre un déplacement ultérieur du transporteur entre la position de chargement et une position d'attente, le transporteur (8) entraînant au cours de ce déplacement ultérieur une palette (2) dont le chargement est terminé.

4. Dispositif suivant la revendication 3, caractérisé en ce qu'un détecteur de position ajustable est associé aux moyens moteurs (14) et au transporteur (8) de manière à commander l'arrêt des moyens moteurs (14) à la fin desdits déplacements.

5. Dispositif suivant l'une quelconque des revendications 1 à 4, caractérisé en ce qu'il comporte un socle (5) avec des moyens de support du réceptacle, en ce que le transporteur (8) comprend deux bras parallèles horizontaux munis de galets (20) roulant librement sur le sol et en ce que les moyens moteurs (14) comprennent pour chaque bras un vérin dont la tige est articulée sur le bras et dont le cylindre est accroché au socle (5).

6. Dispositif selon la revendication 5, caractérisé en ce que chaque bras (8) comporte un train de galets extractibles (28, 29) manœuvré par un moyen moteur auxiliaire (15) porté par le bras.

7. Dispositif selon la revendication 5, caractérisé en ce que le réceptacle (6) comporte une pièce en forme de coulisse dont un flanc est muni d'un taquet basculant (9) capable d'amarrer une palette (2) placée sur le réceptacle et de la libérer sous l'effet de la poussée du transporteur.

8. Dispositif selon la revendication 7, caractérisé en ce que le réceptacle (6) est ajouré par deux échancrures (11) permettant l'engagement des bras transporteurs (8) sous la surface porteuse de la palette (2) quand le réceptacle (6) est en position rabattue.

9. Dispositif selon la revendication 8, caractérisé en ce que chaque bras (8) comporte une butée (16) capable d'accrocher la palette (2) au cours du déplacement de mise en place.

**Claims**

1. Device for placing pallets on a loading area, comprising a mobile conveyor (8) equipped with driving means (14) capable of causing it to effect a horizontal positioning movement between a withdrawal position and a loading position while carrying along with it in this movement an empty pallet, and further comprising a pierced receptacle (6), the conveyor (8) being arranged so as to disengage a pallet (2) from the receptacle during the course of said positioning movement, characterized in that the receptacle (6) is capable of pivoting about a horizontal axis (7) between a receiving position and a laidback position and, in the receiving position, of supporting the pallet (2) placed on edge, and in that the conveyor (8) is arranged so as to fit into the pallet (2) disposed in the pierced receptacle (6) when the latter is in the laid-back position.

2. Device according to claim 1, characterized in that the driving means are arranged so as to translate the conveyor (8) horizontally in a direction perpendicular to the pivoting axis (7) of the receptacle.

3. Device according to claim 2, characterized in that the driving means (14) are arranged so as further to effect a subsequent movement of the conveyor between the loading position and a waiting position, the conveyor (8) carrying along in the course of this subsequent movement a pallet (2), the loading of which is terminated.

4. Device according to claim 3, characterized in that an adjustable position detector is associated with the driving means (14) and with the conveyor (8) so as to control the stopping of the driving means (14) at the end of the said movements.

5. Device according to any one of the claims 1 to 4, characterized in that it comprises a base (5) with means for supporting the receptacle, in that the conveyor (8) includes two horizontal parallel arms equipped with rollers (20) rolling freely on the floor, and in that the driving means (14) include for each arm a jack, the rod of which is jointed to the arm, and the cylinder of which is hooked to the base (5).

6. Device according to claim 5, characterized in that each arm (8) comprises a train of extractable rollers (28, 29) worked by an auxiliary driving means (15) borne by the arm.

7. Device according to claim 5, characterized in that the receptacle (6) comprises a slide-shaped part, one side of which is provided with a pivoting cleat (9) capable of making fast a pallet (2) placed on the receptacle and of releasing it under the influence of the thrust of the conveyor.

8. Device according to claim 7, characterized in that the receptacle (6) is pierced by two indentations (11) allowing the conveyor arms (8) to fit under the carrying surface of the pallet (2) when the receptacle (6) is in the laid-back position.

9. Device according to claim 8, characterized in that each arm (8) comprises a stop (16) capable of snagging the pallet (2) during the course of the positioning movement.

## Patentansprüche

1. Vorrichtung zum Aufstellen von Paletten an einem Ladeplatz mit einem beweglichen Förderer (8), der mit Antriebsmitteln (14) versehen ist, die geeignet sind, ihm eine horizontale Positionierungsbewegung zwischen einer Rückzugslage und einer Beladungslage zu erteilen, wobei mit dieser Bewegung eine leere Palette mitgenommen wird, wobei der Förderer (8) im weiteren einen durchbrochenen Behälter (6) umfasst, und der Förderer (8) derart angeordnet ist, dass eine Palette (2) des Behälters während der genannten Verlagerungsbewegung freigegeben wird, dadurch gekennzeichnet, dass sich der Behälter (6) um eine horizontale Achse (7) zwischen einer Aufnahmelage und einer heruntergeklappten Lage drehen kann und in der Aufnahmelage die aufrechtstehende Palette (2) trägt, wobei der Förderer (8) so angeordnet ist, um in die Palette (2) hineingeführt werden zu können, wobei die Palette im durchbrochenen Behälter (6) angeordnet ist, wenn sich der letztere in der heruntergeklappten Lage befindet.

2. Vorrichtung nach Patentanspruch 1, dadurch gekennzeichnet, dass die Antriebsmittel derart angeordnet sind, um den Förderer (8) in einer horizontalen Verschiebungsbewegung senkrecht zur Drehachse (7) des Behälters zu verschieben.

3. Vorrichtung nach Patentanspruch 2, dadurch gekennzeichnet, dass die Antriebsmittel (14) derart angeordnet sind, um eine weitere Verschiebung des Förderers (8) zwischen der Ladeposition und einer Warteposition zu bewirken, wobei der Förderer (8) im Zuge der weiteren Verschiebung eine Palette mitnimmt, deren Beladung beendet ist.

4. Vorrichtung nach Patentanspruch 3, dadurch gekennzeichnet, dass ein Detektor von verstellbarer Lage den Antriebsmitteln (14) und dem Förderer (8) solchermassen zugeordnet ist, um das Anhalten der Antriebsmittel (14) am Ende der genannten Verlagerungsbewegung zu steuern.

5. Vorrichtung nach einem der vorangehenden Patentansprüche, dadurch gekennzeichnet, dass sie einen Ständer (5) mit Mitteln zum Tragen des Behälters umfasst, und dass der Förderer (8) zwei parallele horizontale Arme aufweist, die mit Rollen (20) versehen sind, welche frei auf dem Boden rollen, und dass die Antriebsmittel (14) für jeden Arm eine Hebevorrichtung umfassen, deren Stange am Arm angelenkt und deren Zylinder am Ständer (5) aufgehängt ist.

6. Vorrichtung nach Patentanspruch 5, dadurch gekennzeichnet, dass jeder Arm (8) einen ausziehbaren Rollenzug (28, 29) umfasst, der durch ein Hilfsantriebsmittel (15), welches durch den Arm getragen wird, betätigt wird.

7. Vorrichtung nach Patentanspruch 5, dadurch gekennzeichnet, dass der Behälter (6) einen Teil in Form einer Kulisse umfasst, deren eine Flanke mit einem kippbaren Anschlag (9) versehen ist, welcher eine auf dem Behälter angeordnete Palette (2) festmachen und sie infolge der Schubwirkung des Förderers freimachen kann.

8. Vorrichtung nach Patentanspruch 7, dadurch gekennzeichnet, dass der Behälter (6) mit zwei Aussparungen (11) durchbrochen ist, welche den Eingriff der Fördererarme (8) unter der tragenden Oberfläche der Palette (2) ermöglichen, wenn sich der Behälter (6) in der heruntergeklappten Lage befindet.

9. Vorrichtung nach Patentanspruch 8, dadurch gekennzeichnet, dass jeder Arm (8) einen Stop (16) aufweist, der derart ausgebildet ist, um die Palette (2) im Zuge der Verlagerungsbewegung anzuhängen.

FIG.1

FIG. 2

0 131 082

FIG. 3

FIG. 4

FIG. 5

3

FIG.6

FIG.7

# FIG. 8